# EUROPEAN PATENT APPLICATION

(11) **EP 1 705 082 A2**
(43) Date of publication of application: **27.09.2006**
(21) Application number: 06005954.0
(22) Date of filing: 23.03.2006
(51) Int. Cl.: B60R 25/00

(54) **Passive keyless entry device**

(30) Priority: 24.03.2005 JP 2005086393
(71) Applicant: ALPS ELECTRIC CO., LTD., Tokyo 145-8501 (JP)
(72) Inventor: Masudaya, Hideki, Ota-ku Tokyo 145-8501 (JP); Abe, Shinya, Ota-ku Tokyo 145-8501 (JP); Kitamura, Tadeshi, Ota-ku Tokyo 145-8501 (JP)
(74) Representative: Klunker . Schmitt-Nilson . Hirsch

(57) **Abstract**

A passive keyless entry device includes an in-vehicle transceiver and a portable transceiver. The in-vehicle transceiver has a clock signal generating circuit, a control signal generating signal that outputs a binary control signal having positive and negative values, a modulation circuit that forms a pulse modulation signal by modulating the clock signals by the control signal, and a transmission circuit that has half-bridge circuits, a low-frequency antenna being connected to output ends of the half-bridge circuits. The change time of the control signal from the positive value to the negative value is set to be slightly later than the usual change time from the positive value to the negative value. During a period from the usual change time of the control signal from the positive value to the negative value up to the change time slightly later than the usual change time, the clock signals modulated by the control signal are inverted clock signals that are shifted by half wavelength with respect to the usual clock signals.

## Description

### BACKGROUND OF THE INVENTION

### 1. Field of the Invention

The present invention relates to a passive keyless entry device having an in-vehicle transceiver and a portable transceiver. More particularly, the present invention relates to a passive keyless entry device which, when a low-frequency signal is transmitted from a low-frequency antenna of an in-vehicle transceiver to a portable transceiver, reduces falling time of a signal at a transmission end time of the low-frequency signal, and increases a transmission speed of the low-frequency signal.

### 2. Description of the Related Art

In recent years, in a vehicle, such as an automobile or the like, in order to enhance convenience, for example, when a driver has a luggage, in order to cause the driver to lock or unlock a door without drawing a key from his pocket or in order to cause the driver to start an engine without inserting the key into a key cylinder, there are many cases in which a passive keyless entry device is mounted on the vehicle. The passive keyless entry device has an in-vehicle transceiver that is mounted on the vehicle, and one or more portable transceiver that is held by the driver of the vehicle. When the driver drives his vehicle, if the driver does not hold the portable transceiver registered in the vehicle, the driver cannot open/close the door of the vehicle or start the engine.

A process for operating the passive keyless entry device is as follows. When the driver who holds the portable transceiver registered in the vehicle goes close to the vehicle, a low-frequency signal including a wakeup signal wirelessly transmitted from the in-vehicle transceiver is received by the portable transceiver. If doing so, the portable transceiver wirelessly transmits a high-frequency signal including an instruction signal to the in-vehicle transceiver in response to the low-frequency signal. When receiving the high-frequency signal, the in-vehicle transceiver performs the control according to the instruction signal included in the high-frequency signal, for example, opens the door of the vehicle, controls a door lock of the vehicle, or unlocks an engine starter, such that the driver can ride in the vehicle and can start the engine.

A configuration has been known in which, during a series of operations, in order to wirelessly transmit the low-frequency signal to the portable transceiver, the in-vehicle transceiver uses two half-bridge circuits, each having a pair of FETs, as a low-frequency signal transmission circuit. In this case, a low-frequency antenna forming an LC resonance circuit is connected between an output end of one half-bridge circuit and an output end of the other half-bridge circuit.

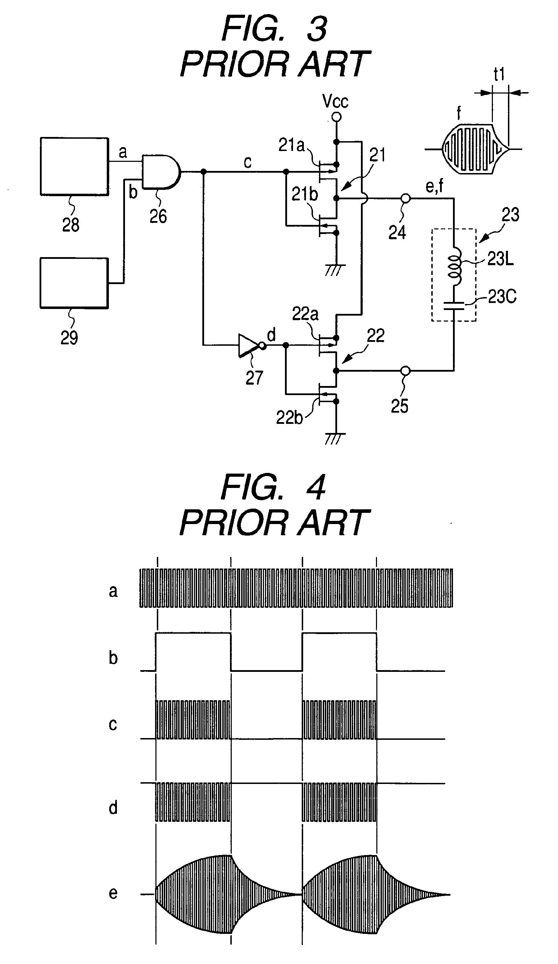

Here, FIG. 3 is a circuit diagram showing an example of the configuration of a low-frequency signal transmission circuit according to the related art. FIG. 4 is a waveform view showing waveforms of individual units of the low-frequency signal transmission circuit shown in FIG. 3.

As shown in FIG. 3, the low-frequency signal transmission circuit has a first half-bridge circuit 21 that has a pair of FETs 21a and 21b connected in series between a power supply Vcc and a ground, a second half-bridge circuit 22 that has a pair of FETs 22a and 22b connected in series between the power supply Vcc and the ground, a low-frequency antenna 23 that forms an LC resonance circuit by an inductor 23L and a capacitor 23C connected in series between an output end 24 of the first half-bridge circuit 21 and an output end 25 of the second half-bridge circuit 22, an AND gate 26, an output end of which is connected to a common gate of the pair of FETs 21a and 21b, and an inverter 27 that is connected between a common gate of the pair of FETs 22a and 22b, and the output end of the AND gate 26. And then, one input end of the AND gate 26 is connected to an output end of a clock signal (square wave carrier signal) generating circuit 28, and the other end thereof is connected to an output end of a binary control signal (modulation signal) generating circuit 29. The binary control signal has positive and negative values. In this case, the clock signal generating circuit 28 generates a clock signal (carrier signal) having a frequency of 125 KHz, as indicated by a waveform a in FIG. 4. The control signal generating circuit 29 generates the binary control signal (modulation signal) having positive and negative values having a frequency of several KHz, as indicated by a waveform b in FIG. 4.

The low-frequency signal transmission circuit having the above-described configuration operates as follows.

If the clock signal generated by the clock signal generating circuit 28 is supplied to one input end of the AND gate 26 and the binary control signal having positive and negative values generated by the control signal generating circuit 29 is supplied to the other input end thereof, during a period in which the binary control signal having positive and negative values has the positive value, the clock signal is output. Further, during a period in which the binary control signal having positive and negative values has the negative value, the output of the clock signal stops, and the modulation signal indicated by a waveform c in FIG. 4 is output to the output end of the AND gate 26. The modulation signal is supplied to the first half-bridge circuit 21 through the common gate of the pair of FETs 21a and 21b, and simultaneously is supplied to the input end of the inverter 27. The inverter 27 inverts the polarity of the supplied modulation signal, and thus an inverted modulation signal indicated by a waveform d in FIG. 4 is output to the output end of the inverter 27. The inverted modulation signal is supplied to the second half-bridge circuit 22 through the common gate of the pair of FETs 22a and 22b. The first half-bridge circuit 21 amplifies the supplied modulation signal, outputs the amplified modulation signal from the output end 24, and supplies that to one end of the low-frequency antenna 23. The low-frequency antenna 23 forms a bipolar modulation signal indicated by a waveform f in FIG. 3 according to the modulation signal and the inverted modulation signal supplied to both ends thereof and transmits a low-frequency signal corresponding to the bipolar modulation signal.

In this case, in view of the signal recognition of a receiving IC, in the low-frequency antenna 23 used in the low-frequency signal transmission circuit, the Q factor of the LC resonance circuit is preferably made as low as possible. When an increase in communication distance is demanded, the low-frequency signal to be wirelessly transmitted needs to have large amplitude. For this reason, it is impossible to set drivability of a driver high without restriction, and thus the Q factor of the LC resonance circuit of the low-frequency antenna 23 needs to be set high.

By the way, in the low-frequency antenna 23 having the LC resonance circuit, when the Q factor of the LC resonance circuit of the inductor 23L and the capacitor 23C is set to be increased, the low-frequency having large amplitude can be wirelessly transmitted. However, since the time constant of the LC resonance circuit is increased, the duration time of a positive falling edge and a negative rising edge at the transmission end time of the bipolar modulation signal is as indicated by a waveform e in FIG. 4, such that the transmission end time of the bipolar modulation signal becomes longer by t₁ than the original end time, that is, the supply stop time of the control signal (the change time from positive polarity to negative polarity), as indicated by the waveform f in FIG. 3. This is because, when the Q factor of the circuit is used as the time constant τ of the low-frequency antenna 23, the representation τ = 2 Q/*ω* (*ω* = 2 n f) is established. And then, if the duration time of the transmission end time of the bipolar modulation signal is made longer, the time interval between the transmission end time of the bipolar modulation signal previously transmitted and the transmission start time of the bipolar modulation signal to be subsequently transmitted is shortened. Accordingly, when the portable transceiver receives and reads the low-frequency signal, there is a strong possibility that a reading error occurs. In order to avoid the reading error, if the setup is changed such that the time interval between the transmission end time of the bipolar modulation signal previously transmitted and the transmission start time of the bipolar modulation signal to be subsequently transmitted extends, the transmission speed of the low-frequency signal may be lowered by the extended time interval, and transmission efficiency may be degraded.

In order to prevent these undesirable states from occurring, when the low-frequency signal is wirelessly transmitted from the low-frequency antenna having the LC resonance circuit, a discharge path is added to the LC resonance circuit such that remaining vibration energy of the LC resonance circuit is discharged through the discharge path whenever the series resonance state of the LC resonance circuit stops. Further, the discharge stops before the next series resonance of the LC resonance circuit starts. By doing so, the time interval of the transmission end time of one low-frequency signal and the transmission start time of the next low-frequency signal is made clear. For example, in JP-A-10-224276, an automatic recognition apparatus (corresponding to the low-frequency signal transmission circuit) is suggested.

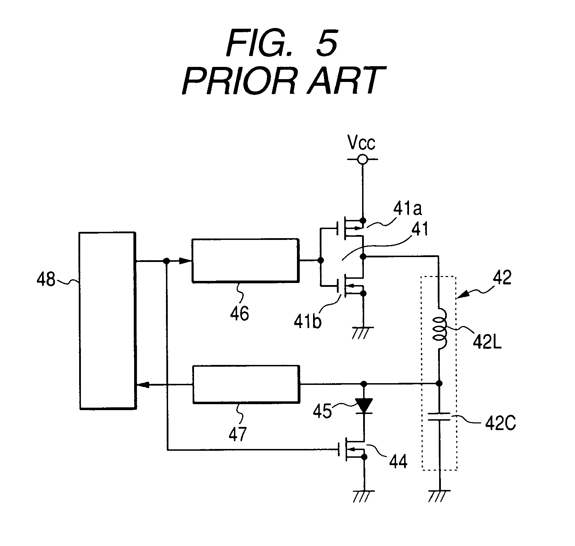

FIG. 5 is a circuit diagram showing the essential configuration of the automatic recognition apparatus suggested in JP-A-10-224276.

As shown in FIG. 5, the automatic recognition apparatus has a half-bridge circuit 41 that has a pair of FETs 41a and 41b connected in series between a power supply Vcc and a ground, a low-frequency antenna 42 that has an antenna coil 42L and a capacitor 42C connected in series between an output end of the half-bridge circuit 41 and the ground so as to form an LC resonance circuit, a discharge circuit that has a FET 44 and a diode 45 connected in series between a connection point of the antenna coil 42L and the capacitor 42C, and the ground, a transmission circuit 46, an output end of which is connected to a common gate of the pair of FETs 41a and 41b, a demodulation circuit 47, an input end of which is connected to the connection point of the antenna coil 42L and the capacitor 42C, and a control circuit 48, an output end of which is connected to an input end of the transmission circuit 46 and a gate of the FET 44, and an input end of which is connected to an output end of the demodulation circuit 47.

In this case, the control circuit 48 generates a binary control signal having a negative output level and a positive stop level from the output end, and supplies the generated binary control signal to the transmission circuit 46 and the FET 44. When the supplied binary control signal has the negative output level, the transmission circuit 46 outputs a clock signal having a higher frequency than that of the binary control signal. Further, when the binary control signal has the positive stop level, the transmission circuit 46 generates a transmission signal for stopping the output of the clock signal, and supplies the transmission signal to the common gate of the pair of FETs 41a and 41b.

The automatic recognition apparatus having the above-described configuration operates as follows.

During a period in which the supplied binary control signal has the negative output level, the transmission circuit 46 outputs the clock signal and supplies the clock signal to the subsequent half-bridge circuit 41. The half-bridge circuit 41 amplifies the supplied clock signal, and supplies the amplified clock signal to the low-frequency antenna 42 from the output end. The low-frequency antenna 42 forms the LC resonance circuit in which the antenna coil 42L resonates with the frequency of the clock signal, together with the capacitor 42C. Accordingly, if the clock signal having large amplitude is supplied to the low-frequency antenna 42, a low-frequency signal is wirelessly transmitted from the low-frequency antenna 42. Further, during the period, since the binary control signal supplied to the FET 44 has the negative output level, the FET 44 is turned off, and thus the FET 44 does not exert influence on the wireless transmission operation of the low-frequency signal of the low-frequency antenna 42.

Next, if the binary control signal is changed from the negative output level to the positive stop level, the transmission circuit 46 stops the output of the clock signal, such that the clock signal is not supplied to the half-bridge circuit 41. At this time, the half-bridge circuit 41 stops the supply of the amplified clock signal to the low-frequency antenna 42. And then, in an ideal state, if the supply of the clock signal to the low-frequency antenna 42 stops, the wireless transmission of the low-frequency signal from the low-frequency antenna 42 immediately stops. However, even when the supply of the clock signal stops, vibration energy according to the frequency of the clock signal is charged and remains in the LC resonance circuit including the antenna coil 42L, in a short period, the wireless transmission of the low-frequency signal from the antenna coil 42L is continued. By the way, in the automatic recognition apparatus, if the supply of the clock signal stops, the binary control signal to be supplied to the FET 44 is changed to the positive stop level. Accordingly, the FET 44 is turned on, and also the diode 45 is turned on by remaining vibration energy of the LC resonance circuit. At this time, remaining vibration energy of the LC resonance circuit is discharged to the ground through the FET 44 and the diode 45. Accordingly, the wireless transmission of the low-frequency signal from the antenna coil 42L stops in short time, and thus the time interval between the transmission end time of one low-frequency signal and the transmission start time of the next low-frequency signal can be clearly recognized. Therefore, it is possible to obtain the automatic recognition apparatus in which the transmission speed of the transmission low-frequency signal is not lowered, and transmission efficiency is not degraded.

The automatic recognition apparatus has advantages of preventing the transmission speed of the transmission low-frequency signal from being lowered, and preventing transmission efficiency from being degraded. However, since the discharge path having the series circuit of the FET 44 and the diode 45 is connected to the connection point of the antenna coil 42L and the capacitor 42C, the circuit configuration and wiring lines are complicated. In particular, when the connection is performed by using lead lines, a serious problem arises. Further, as the supply of the clock signal stops, the binary control signal to be supplied to the FET 44 is changed to the positive stop level so as to turn on the FET 44, such that remaining vibration energy of the low-frequency antenna 42 is discharged to the ground. In this case, however, there is a problem in that the binary control signal cannot cope with a positive output level and a negative stop level. In addition, the automatic recognition apparatus relates to the configuration (hereinafter, referred to as an asymmetric low-frequency signal transmission circuit) in which the LC resonance circuit including the antenna coil 42L is connected between the output end of one half-bridge circuit 41 and the ground, not the configuration (hereinafter, referred to as a symmetric low-frequency signal transmission circuit) in which two half-bridge circuits are used, and the LC resonance circuit including the antenna coil is connected to the output ends of the half-bridge circuits.

### SUMMARY OF THE INVENTION

The invention has been finalized in consideration of the technical background, and it is an object of the invention to provide a passive keyless entry device which can prevent a transmission speed of a transmission signal from being lowered and prevent transmission efficiency from being degraded with a simple configuration, without using complex wiring lines, and which can also be applied to a symmetric low-frequency signal transmission circuit.

In order to achieve the above-described objects, according to an aspect of the invention, a passive keyless entry device includes an in-vehicle transceiver, and a portable transceiver. The in-vehicle transceiver transmits a low-frequency request signal to the portable transceiver, the portable transceiver transmits a high-frequency instruction signal for controlling and operating an in-vehicle controlled apparatus in response to the request signal, and the in-vehicle transceiver receives the instruction signal so as to control and operate the in-vehicle controlled apparatus. The in-vehicle transceiver has a clock signal generating circuit that outputs clock signals, a control signal generating circuit that outputs a binary control signal having positive and negative values, a modulation circuit that forms a pulse modulation signal by modulating the clock signals by the binary control signal having positive and negative values, and a transmission circuit that has a half-bridge circuit having a pair of FETs, the pulse modulation signal being input to a common gate of the pair of FETs, and a low-frequency antenna constituting an LC resonance circuit being connected to an output end of the half-bridge circuit. The clock signals include a first clock signal and a second clock signal, predetermined time after the control signal is changed from the negative value to the positive value is formed by the first clock signal having a predetermined cycle, and time immediately after the predetermined time lapses until the control signal is changed from the positive value to the negative value is formed by the second clock signal that is shifted by half wavelength with respect to the first clock signal.

In the passive keyless entry device according to the aspect of the invention, the second clock signal and the control signal having positive and negative values may be set to be simultaneously generated during a period corresponding to quarter to half of a time constant of the low-frequency antenna.

### BRIEF DESCRIPTION OF THE DRAWINGS

FIG. 1 relates to an embodiment of a passive keyless entry device according to the invention, and is a circuit diagram showing an example of the configuration of a low-frequency signal transmission circuit, which is used in an in-vehicle transceiver;
FIG. 2 is a waveform view showing signal waveforms of individual parts of the low-frequency signal transmission circuit shown in FIG. 1;
FIG. 3 is a circuit diagram showing an example of the configuration of a low-frequency signal transmission circuit according to the related art;
FIG. 4 is a waveform view showing signal waveforms of individual parts of the low-frequency signal transmission circuit shown in FIG. 3; and
FIG. 5 is a circuit diagram showing the essential configuration of an automatic recognition apparatus which is suggested in JP-A-10-224276.

### DESCRIPTION OF THE PREFERRED EMBODIMENT

Hereinafter, an embodiment of the invention will be described with reference to the drawings.

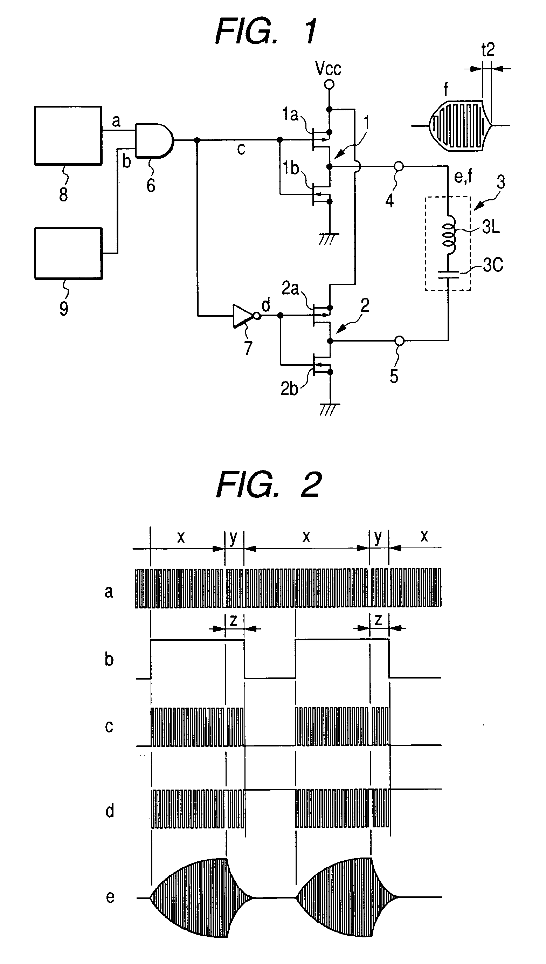

FIG. 1 relates to an embodiment of a passive keyless entry device according to the invention. FIG. 1 is a circuit diagram showing an example of the configuration of a low-frequency signal transmission circuit, which is used in an in-vehicle transceiver. FIG. 2 is a waveform view showing signal waveforms of individual parts of the low-frequency signal transmission circuit shown in FIG. 1.

As shown in FIG. 1, the low-frequency signal transmission circuit according to the embodiment includes a first half-bridge circuit 1 that has a pair of FETs 1a and 1b, a drain-to-source path being connected in series, a source of the FET 1a being connected to a power supply terminal Vcc, and a source of the FET 1b being connected to a ground, a second half-bridge circuit 2 that has a pair of FETs 2a and 2b, a drain-to-source path being connected in series, a source of the FET 2a being connected to the power supply terminal Vcc, and a source of the FET 2b being connected to the ground, an output end 4 of the first half-bridge circuit 1 that is connected to a common drain of the pair of FETs 1a and 1b, an output end 5 of the second half-bridge circuit 2 that is connected to a common drain of the pair of FETs 2a and 2b, a low-frequency antenna 3 that forms an LC resonance circuit having an inductor 3L and a capacitor 3C connected between the output end 4 and the output end 5, an AND gate 6, an output end of which is connected to a common gate of the pair of FETs 1a and 1b, and an inverter 7 that is connected between a common gate of the pair of FETs 2a and 2b and the output end of the AND gate 6. And then, one input end of the AND gate 6 is connected to an output end of a clock signal (square wave carrier signal) generating circuit 8, and the other end thereof is connected to a control signal (modulation signal) generating circuit 9.

In this case, the clock signal generating circuit 8 is configured to generate a clock signal (carrier signal) having a frequency of 125 KHz such that a first section x generating the clock signal as it is and a second section y generating an inverted clock signal subsequent to the first section and shifted by half wavelength with respect to the clock signal cyclically arrive, as indicated by a waveform a in FIG. 2. A generation duration period of the second section is set to be considerably shorter than a generation duration period of the first section. Further, the control signal generating circuit 9 generates the control signal (modulation signal) b having a frequency of several KHz, as indicated by a waveform b in FIG. 2. In general, when a signal representing, for example, 1 and 0 is transmitted as the control signal, a positive level section and a negative level section are set at a duty ratio 50%. In contrast, according to the invention, a positive level section is set to slightly extend by the amount z more than the positive level section at the duty ratio 50%, and a negative level section is set to be slightly reduced less than the negative level section at the duty ratio 50%. And then, as indicated by waveforms b and c in FIG. 2, the relationship between the clock signal and the control signal is set such that extended time of the positive level section of the control signal is equal to time of the second section generating the inverted clock signal.

That is, in this embodiment, the control signal extends by the amount z of the signal waveform b shown in FIG. 2 with respect to the original control signal as the reference. During the z period, at least the clock signal is inverted.

Moreover, even when the second section y is set to be longer than the amount z, since there is no change in the modulation signal c, it does not particularly matter, but the second section needs to be returned until the next control signal is input. Accordingly, this operation is executed only when the control signal is changed from the positive value 1 to the negative value 0. When the control signal is changed from the negative value 0 to the positive value 1, this processing is not executed.

The operation of the low-frequency signal transmission circuit having the above-described configuration will be described below with reference to FIGS. 1 and 2.

The clock signal generated by the clock signal generating circuit 8 is supplied to one end of the AND gate 6, and the binary control signal generated by the control signal generating circuit 9 is supplied to the other end of the AND gate 6. If doing so, when the binary control signal becomes the positive level, the clock signal is output. Further, when the binary control signal becomes the negative level, the output of the clock signal stops, and the modulation signal corresponding to the binary control signal is output to the output end, as indicated by the waveform c in FIG. 2. Moreover, it is configured such that the clock signal corresponding to the control signal is generated by a control circuit (not shown). The modulation signal is supplied to the first half-bridge circuit 1 through the common gate of the pair of FETs 1a and 1b, and also is supplied to the input end of the inverter 7. The inverter 7 inverts the polarity of the supplied modulation signal, such that an inverted modulation signal is output to the output end, as indicated by a waveform d in FIG. 2. The inverted modulation signal is supplied to the second half-bridge circuit 2 through the common gate of the pair of FETs 2a and 2b. The first half-bridge circuit 1 amplifies the supplied modulation signal, and outputs the amplified modulation signal from the output end 4 so as to supply that to one end of the low-frequency antenna 3. The second half-bridge circuit 2 amplifies the supplied inverted modulation signal, and outputs the amplified inverted modulation signal from the output end 5 so as to supply that to the other end of the low-frequency antenna 3. A bipolar modulation signal is formed according to the modulation signal and the inverted modulation signal supplied to both ends of the low-frequency antenna 3, as indicated by a waveform 2 in FIG. 2, and the low-frequency antenna 3 wirelessly transmits a low-frequency signal corresponding to the bipolar modulation signal.

In this case, when the value of the inductor 3L or the capacitor 3C in the low-frequency antenna 3 is set such that the Q factor of the LC resonance circuit having the inductor 3L and the capacitor 3C becomes larger, and the low-frequency signal to be wirelessly transmitted has large amplitude, a communication distance can also be increased, without increasing drivability of a driver. In some cases, drivability of the driver can be lowered, without changing the communication distance.

By the way, in the low-frequency signal transmission circuit, when the binary control signal is changed from the positive level by then to the negative level, the supply of the bipolar modulation signal to the low-frequency antenna 3 stops. On the other hand, before the control signal is changed from the positive level to the negative level, when the positive level enters the extended section, the clock signal is changed to the polarity shifted by half wavelength from the polarity by then, that is, the inverted clock signal. With the arrival of the inverted clock signal, a signal on rising is offset. And then, as indicated by the waveform e in FIG. 2, the slopes of positive falling and negative rising envelopes of the control signal to be supplied to the low-frequency antenna 3 become steep, and remaining energy in the LC resonance circuit is significantly attenuated. Accordingly, positive falling and negative rising characteristics of the bipolar modulation signal to be supplied to the low-frequency antenna 3 become steep. As a result, as shown in FIG. 1, the transmission end time of the low-frequency signal to be wirelessly transmitted from the low-frequency antenna 3 extends by a time t₂ more than the supply stop time of the original control signal. The time t₂ can be considerably shorter than the time t1 in the related art symmetric low-frequency signal transmission circuit shown in FIG. 3.

In this case, preferably, the extended period z of the positive level in the binary control signal having positive and negative values, and a period from the arrival of the change time from the normal positive value to the negative value of the binary control signal having positive and negative values (from x to y) to the arrival of a slightly later change time (from y to x) in the clock signal corresponding to the extended period z are primarily set to a period corresponding to quarter to half of the time constant determined by the values of the inductor 3L and the capacitor 3C of the low-frequency antenna 3.

As such, if the transmission end time of the low-frequency signal to be wirelessly transmitted from the low-frequency antenna 3 becomes shorter, the time interval between the transmission end time of one low-frequency signal and the transmission start time of the next low-frequency signal can be clearly recognized. Therefore, a transmission speed of the low-frequency signal can be prevented from being lowered, and transmission efficiency can be prevented from being degraded.

Moreover, in this embodiment, the low-frequency antenna 3 in which the Q factor the LC resonance circuit is increased is used as an example. Alternatively, as the low-frequency antenna 3 according to the invention, one in which the Q factor of the LC resonance circuit is low may be used. In this case, the same effects can be expected.

The low-frequency signal transmission circuit described above uses the first half-bridge circuit 1 and the second half-bridge circuit 2 as the transmission circuit. However, the passive keyless entry device of the invention is not limited to the symmetric low-frequency signal transmission circuit in which the two half-bridge circuits 1 and 2 are used as the transmission circuit. For example, as regards an asymmetric low-frequency signal transmission circuit in which one half-bridge circuit is used, the same advantages can be obtained.

According to the invention, the low-frequency signal transmission circuit, which is used in the in-vehicle transceiver of the passive keyless entry device, has the clock signal generating circuit that outputs the clock signals, the control signal generating circuit that outputs the binary control signal having positive and negative values, the modulation circuit that forms the pulse modulation signal by modulating the clock signals by the binary control signal having positive and negative values, and the transmission circuit that has the half-bridge circuit having a pair of FETs, the pulse modulation signal being input to the common gate of the pair of FETs, and the low-frequency antenna constituting the LC resonance circuit being connected to the output end of the half-bridge circuit. The clock signals include the first clock signal and the second clock signal, the predetermined time after the control signal is changed from the negative value to the positive value is formed by the first clock signal having the predetermined cycle, and the time immediately after the predetermined time lapses until the control signal is changed from the positive value to the negative value is formed by the second clock signal that is shifted by half wavelength with respect to the first clock signal. Accordingly, while a signal having the same cycle as that of the first clock signal is continuously generated by the low-frequency antenna immediately after the predetermined time lapses, the second clock signal shifted by half wavelength is also input, such that the signals are offset. Therefore, the wireless transmission of the low-frequency signal from the low-frequency antenna can stop in short time after the transmission end time arrives, and thus the time interval between the transmission end time of one low-frequency signal and the transmission start time of he next low-frequency signal can be clearly recognized. As a result, it is possible to obtain the passive keyless entry device which prevents the transmission speed of the transmission signal from being lowered, and prevents transmission efficiency from being degraded.

In this case, the cycle at which the second clock signal and the binary control signal having positive and negative values are generated is set to the period corresponding quarter to half of the time constant of the low-frequency antenna. If doing so, the wireless transmission of the low-frequency signal from the low-frequency antenna can effectively stop in short time after the transmission end time arrives. Further, there is no case in which a new signal is transmitted by the second clock signal and the binary control signal having positive and negative values.

## Claims

1. A passive keyless entry device comprising:
an in-vehicle transceiver; and
a portable transceiver,
wherein the in-vehicle transceiver transmits a low-frequency request signal to the portable transceiver,
the portable transceiver transmits a high-frequency instruction signal for controlling and operating an in-vehicle controlled apparatus in response to the request signal,
the in-vehicle transceiver receives the instruction signal so as to control and operate the in-vehicle controlled apparatus,
the in-vehicle transceiver has:
a clock signal generating circuit that outputs clock signals;
a control signal generating circuit that outputs a binary control signal having positive and negative values;
a modulation circuit that forms a pulse modulation signal by modulating the clock signals by the binary control signal having positive and negative values; and
a transmission circuit that has a half-bridge circuit having a pair of FETs, the pulse modulation signal being inputted to a common gate of the pair of FETs, and a low-frequency antenna constituting an LC resonance circuit being connected to an output end of the half-bridge circuit,
the clock signals include a first clock signal and a second clock signal,
predetermined time after the control signal is changed from the negative value to the positive value is formed by the first clock signal having a predetermined cycle, and
time until the control signal is changed from the positive value to the negative value, immediately after the predetermined time lapses, is formed by the second clock signal that is shifted by half wavelength with respect to the first clock signal.

2. The passive keyless entry device according to claim 1,
wherein the first clock signal and the second clock signal have the same frequency.

3. The passive keyless entry device according to claim 1 or 2,
wherein the second clock signal and the control signal having positive and negative values are set to be simultaneously generated during a period corresponding to quarter to half of a time constant of the low-frequency antenna.
